(19) Europäisches Patentamt / European Patent Office / Office européen des brevets

(11) **EP 2 494 673 B1**

(12) **FASCICULE DE BREVET EUROPEEN**

(45) Date de publication et mention
de la délivrance du brevet:
**26.10.2016 Bulletin 2016/43**

(21) Numéro de dépôt: **10785463.0**

(22) Date de dépôt: **26.10.2010**

(51) Int Cl.:
*H01M 10/052* $^{(2010.01)}$     *H01M 10/44* $^{(2006.01)}$
*H02J 7/00* $^{(2006.01)}$

(86) Numéro de dépôt international:
**PCT/FR2010/000703**

(87) Numéro de publication internationale:
**WO 2011/051575 (05.05.2011 Gazette 2011/18)**

(54) **PROCÉDÉ DE CHARGE OU DE DÉCHARGE D'UNE BATTERIE POUR DÉTERMINER LA FIN DE CHARGE OU DE DÉCHARGE EN FONCTION DE MESURES DE COURANT ET DE TEMPÉRATURE**

VERFAHREN ZUM LADEN ODER ENTLADEN EINER BATTERIE ZUR BESTIMMUNG DES ENDES EINES LADE- ODER ENTLADEVORGANGS JE NACH STROM- UND TEMPERATURMESSUNG

METHOD FOR CHARGING OR DISCHARGING A BATTERY IN ORDER TO DETERMINE THE END OF CHARGING OR DISCHARGING ON THE BASIS OF MEASUREMENTS OF CURRENT AND TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2009 FR 0905201**

(43) Date de publication de la demande:
**05.09.2012 Bulletin 2012/36**

(73) Titulaire: **Commissariat à l'Énergie Atomique et aux Énergies Alternatives**
**75015 Paris (FR)**

(72) Inventeurs:
• **KLEIN, Jean-Marie**
**F-73420 Viviers du Lac (FR)**
• **DELAILLE, Arnaud**
**F-73000 Bassens (FR)**
• **GENIES, Sylvie**
**F-38120 Saint Egrève (FR)**

(74) Mandataire: **Talbot, Alexandre et al**
**Cabinet Hecké**
**Europole**
**10, rue d'Arménie - BP 1537**
**38025 Grenoble Cedex 1 (FR)**

(56) Documents cités:
**EP-A1- 1 990 890        EP-A2- 0 768 745**
**EP-A2- 0 982 829        EP-A2- 1 933 159**
**FR-A1- 2 780 827        US-A1- 2003 184 446**
**US-B1- 6 453 249**

**EP 2 494 673 B1**

## Description

### Domaine technique de l'invention

L'invention est relative à un procédé de charge ou de décharge d'une batterie.

### État de la technique

Afin d'optimiser le fonctionnement des batteries, il a été nécessaire de développer des régulateurs chargés de la gestion de différentes stratégies de charge et/ou de décharge. Les nouvelles technologies s'orientent de plus en plus vers l'utilisation de sources d'énergies renouvelables permettant soit d'injecter du courant dans un réseau électrique pour son utilisation directe, soit de stocker le courant généré dans une batterie pour son utilisation future.

Un mode de régulation connu est de type connexion/déconnexion ("On/Off" en anglais), ce type est basé sur l'interruption de la charge lorsque la tension atteint un premier seuil de tension haut HVD (« High Voltage Disconnect » en anglais) et sa reprise lorsque la tension atteint un deuxième seuil de tension HVR (« High Voltage Reconnect » en anglais). La régulation de type connexion/déconnexion est souvent utilisée dans le domaine photovoltaïque, dans lequel les critères de fin de charge sont en général absents. En effet, l'utilisation du système par un usager permet de décharger la batterie tout en mettant fin à la régulation. Cependant, sans action de l'usager, une inutilisation prolongée du système peut conduire à une surcharge de la batterie pouvant l'endommager.

Il est possible de déterminer la fin de la charge en fixant une durée maximum pour la régulation. Cependant, ce critère n'est pratiquement jamais utilisé car le temps de charge en régulation pour atteindre une pleine charge de la batterie est variable selon le régime de courant de charge, le type de batterie utilisée ou encore l'état de santé de la batterie.

Or, la gestion de la fin de charge est particulièrement cruciale pour atteindre un état de charge donné d'une batterie tout en limitant certaines réactions parasites, notamment l'électrolyse de l'eau en ce qui concerne les batteries à électrolyte aqueux.

La limitation de ces réactions parasites est un enjeu majeur, en vue à la fois :

- de limiter le besoin de maintenance des batteries dites ouvertes, dans lesquelles il est possible d'ajouter de l'eau pour compenser les pertes,
- d'assurer la sécurité des batteries étanches, dans lesquelles on ne peut ajouter de l'eau, et où l'excès de charge peut conduire à un emballement thermique et/ou à l'explosion,
- et enfin d'optimiser la durée de vie des batteries.

Le document EP1990890 décrit un procédé de charge utilisant deux modes de charge asservis par une unité de contrôle de la charge. Dans le premier mode de charge, la charge est à courant régulé, et dans le second mode de charge, la charge est à tension asservie. Dans le premier mode de charge, le procédé comporte une valeur seuil de tension qui est fonction d'une température et d'un courant de charge. Lorsque la valeur seuil de tension est atteinte, l'unité de contrôle change de comportement, et la fin de charge est détectée pour stopper la charge lors d'une élévation rapide de la température de la batterie, ou si la valeur du courant de charge atteint un seuil prédéterminé.

Le document US 6 453 249 B1 publié le 17 septembre 2002 décrit deux cartographies de la valeur de la tension pour des états de charge de la batterie correspondant à 80% et à 20%, en fonction de la température de la batterie et du courant circulant dans la batterie selon le preambule de la revendication 1.

### Objet de l'invention

L'objet de l'invention consiste à réaliser une charge ou une décharge d'une batterie en arrêtant, au bon moment, la charge ou la décharge de sorte à optimiser la durée de vie de la batterie.

Ce but est atteint par les revendications annexées, et plus particulièrement en ce que le procédé comporte les étapes suivantes :

- mesurer une tension aux bornes de la batterie,
- déterminer un seuil de tension de fin de charge ou de décharge en fonction d'un couple de mesures formé par une mesure de la température représentative de la température de la batterie et une mesure du courant circulant dans la batterie,
- comparer la tension mesurée avec le seuil de tension de fin de charge ou de décharge,
- stopper la charge ou la décharge lorsque le seuil de tension est atteint.

L'invention est définie par les caractéristiques de la revendication independante. Les modes de realisations préférés sont définis par les revendications dépendentes.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente un exemple de système autonome.
La figure 2 représente une cartographie en 3-Dimensions des seuils de tension représentatifs d'un état de charge de 80% en fonction du courant de charge et de la température.

La figure 3 représente une cartographie en 3-Dimensions des seuils de tension représentatifs d'un état de décharge de 30% en fonction du courant de charge et de la température.

La figure 4 représente des courbes de l'évolution de la tension d'une batterie en fonction de l'état de charge pour des valeurs de courant de charge différentes à une température fixée.

La figure 5 illustre un diagramme décisionnel intégré à un régulateur de la charge et de la décharge d'une batterie.

**Description de modes préférentiels de réalisation**

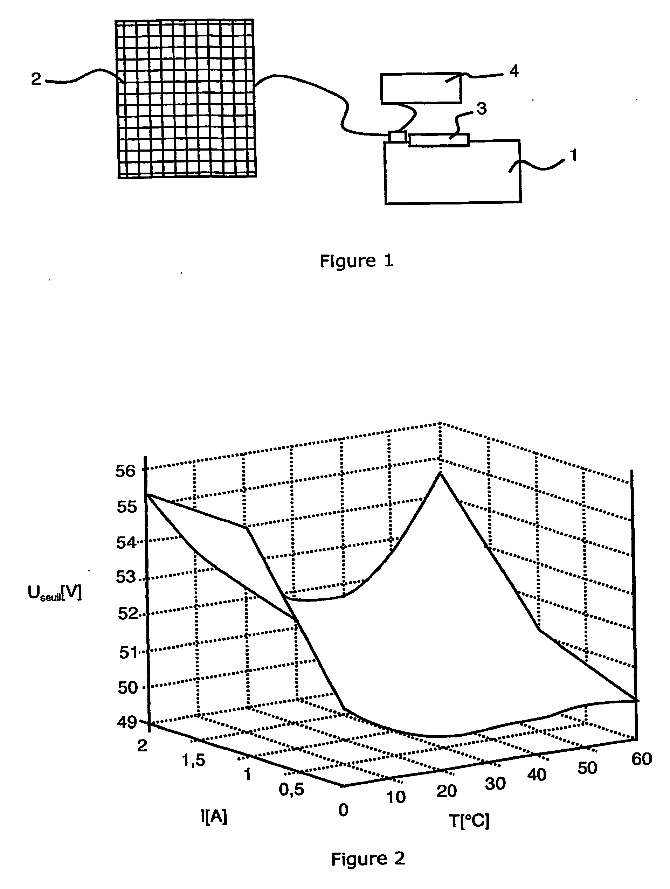

Comme l'illustre la figure 1, un système autonome comporte généralement une source d'énergie renouvelable reliée à une batterie 1. La batterie 1 est rechargée par la source d'énergie renouvelable pouvant être de type énergie solaire, énergie éolienne, énergie hydraulique ou encore énergie géothermique. Par définition, les sources d'énergie renouvelables ne sont pas fiables dans la continuité de la fourniture de services, c'est-à-dire qu'elles ne produisent pas de courant à régime constant. Cette inconstance rend caduque l'utilisation de procédés de charge et de décharge classiques. Sur la figure 1, la batterie 1 est rechargée par au moins un panneau solaire 2, dès lors, le passage d'un simple nuage peut diminuer l'intensité du courant de charge voire interrompre la charge de la batterie si les conditions d'ensoleillement sont trop défavorables.

Ainsi, les caractéristiques de charge ou de décharge d'une batterie peuvent varier en fonction du régime de charge/décharge et de la température de la batterie 1. L'asservissement de la charge à une énergie renouvelable rend donc difficile la détermination du moment où la charge doit être stoppée. De même, afin d'éviter la dégradation de la batterie, il est aussi préférable de ne pas réaliser une décharge trop profonde de cette dernière, les mêmes principes de charge s'appliquent donc à la décharge de la batterie 1.

Bien que le procédé décrit ci-après soit particulièrement adapté pour une batterie reliée à une source d'énergie renouvelable, il peut aussi être adapté à tout type de batterie reliée à une source d'énergie à courant variable.

Ainsi, le procédé de charge ou de décharge d'une batterie 1 reliée, de préférence, à une source d'énergie 2 renouvelable, comporte au moins une mesure de la tension $U_b$ aux bornes de la batterie 1, et la comparaison de la tension mesurée $U_b$ avec un seuil de tension de fin de charge ou de décharge. Le procédé comporte en outre une mesure d'une température $T_b$ représentative de la température de la batterie 1, et une mesure du courant $I_b$ circulant dans la batterie, formant ainsi un couple de mesures $(T_b, I_b)$. Par convention, si le courant est négatif, la batterie se décharge, sinon elle se recharge. Le seuil de tension est déterminé en fonction du couple de mesures formé par la mesure de la température $T_b$ et la mesure du courant $I_b$. En effet, le seuil de tension peut varier en fonction des conditions d'utilisation, c'est-à-dire en fonction du courant de charge, respectivement de décharge, et de la température $T_b$ de la batterie 1. Dès lors, le seuil de tension, déterminé à partir du couple de mesures, permet d'effectuer des corrections en affinant le critère de fin de charge ou de décharge.

Si la tension mesurée Ub atteint le seuil de tension, alors la charge, ou la décharge, de la batterie est stoppée. Par stoppée, on entend que le critère de fin de charge, ou de décharge, de la batterie est atteint. Dans ce cas, la charge ne sera pas reprise tant que la tension mesurée ne redevient pas inférieure au seuil de tension. De la même manière, lorsque le critère de fin de décharge est atteint, la décharge ne sera pas reprise tant que la tension mesurée reste inférieure audit seuil de tension.

Par courant mesuré Ib, on entend soit le courant instantané, soit une moyenne du courant mesuré sur un temps déterminé.

De préférence, les mesures de la tension $U_b$ aux bornes de la batterie 1, du courant $I_b$ circulant dans la batterie et de la température $T_b$ de la batterie 1 sont réalisées simultanément. Ceci permet d'obtenir à l'instant où les mesures sont réalisées une image précise des caractéristiques de la charge ou de la décharge.

De préférence, les différentes mesures sont effectuées cycliquement de sorte à connaître à intervalle régulier les propriétés de la batterie et stopper la charge, ou la décharge, au plus tôt lorsque le seuil de fin de charge ou de décharge est atteint.

Selon un développement, le seuil de tension correspond, par exemple, à un seuil d'état de charge en fonction du type de batterie. Ainsi, en décharge, le seuil peut être choisi pour éviter une décharge profonde de la batterie, et en charge le seuil peut être choisi de sorte à éviter les réactions chimiques parasites de la surcharge.

Afin d'éviter une dégradation de la batterie, le seuil de tension fonction du courant et de la température mesurée correspond, de préférence, à une valeur représentative d'un état de charge de 20% à 30% de la batterie. Ce seuil permet de préserver la batterie des dégradations comme la sulfatation pour les batteries au plomb, ou le dépôt de lithium métal dans les batteries au lithium, il permet en outre de maintenir une puissance minimale disponible dans la batterie. Le seuil de tension correspondant au critère de fin de charge correspond, de préférence, à une valeur représentative d'un état de charge de 75% à 90% de la batterie. Un état de charge de 75% permettra de limiter le dégazage des batteries au plomb, 80% permettra d'augmenter la durée de vie des batteries LiMH, et 90% permettra d'éviter d'avoir à équilibrer les différents éléments de la batterie lorsque cette dernière est au lithium. Autrement dit, le seuil de tension déterminé en fonction des mesures du courant Ib et de la température Tb peut être représentatif de l'état de charge de la batterie, c'est-à-dire de son état physique. En arrêtant la charge ou la décharge au bon moment, il est possible de préserver l'intégrité de la batterie dans le temps.

Si la batterie reste constamment entre ces seuils de tension de charge et de décharge, les réactions chimiques parasites sont fortement diminuées et l'autonomie de la batterie sur le long terme est grandement améliorée.

L'état de charge correspond à un indicateur d'une batterie s'exprimant en général en pourcentage. À 0% la batterie est considérée comme vide et à 100% la batterie est considérée comme pleine. Typiquement l'état de charge varie en fonction de la quantité de courant stocké dans la batterie par rapport à la capacité nominale de la batterie.

Autrement dit, afin d'arrêter la charge ou la décharge au bon moment, il est préférable que la détermination dudit seuil de tension soit réalisée en sélectionnant le seuil de tension associé au couple de mesures, c'est-à-dire celui obtenu par mesure de la température $T_b$ et la mesure du courant $I_b$ circulant dans la batterie 1, parmi un ensemble prédéterminé de couples de mesures. Ainsi, les critères de fin de charge et de décharge seront affinés de sorte à préserver au mieux l'intégrité de la batterie. Pour cela, le seuil de tension est, de préférence, fourni à partir d'une table de valeurs de tension. La table peut alors comporter deux entrées, une première entrée étant représentative d'une valeur de courant et une seconde entrée étant représentative d'une valeur de température. Si les valeurs mesurées de température $T_b$ et de courant $I_b$ ne correspondent pas à un couple connu, c'est-à-dire que ces valeurs ne permettent pas d'obtenir à partir de la table une valeur de tension, le couple le plus proche de ces deux valeurs permettant de donner une valeur de tension pourra être choisi pour déterminer le seuil de tension correspondant au critère de fin de charge ou de décharge.

Une telle table peut être réalisée au préalable dans des conditions où tous les paramètres de charge ou de décharge peuvent être fixés (courant de charge/décharge, température, état de charge, etc.). À titre d'exemple particulier, la réalisation de la table comporte les étapes suivantes :

- prévoir une pluralité de courbes représentatives de la tension $U_b$ aux bornes de la batterie 1 en fonction de l'état de charge de la batterie 1, chaque courbe étant établie pour un couple de température de la batterie $T_b$ et de courant $I_b$ circulant dans la batterie 1,
- déterminer, pour chaque courbe, une valeur de tension à partir d'un état de charge de la batterie 1,
- ajouter dans la table chaque valeur de tension ainsi déterminée.

Ainsi, chaque valeur de tension est accessible en fixant les première et seconde entrées de la table respectivement au courant et à la température ayant permis la détermination de ladite valeur de tension.

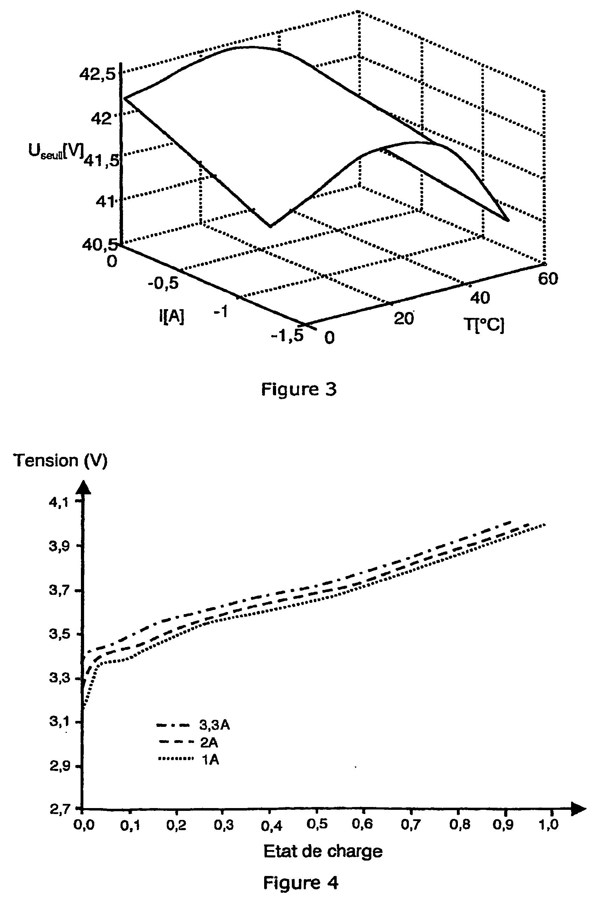

À titre d'exemple particulier de réalisation de la table, pour une charge de la batterie 1, une étape consiste à établir une pluralité de courbes comme celles illustrés à la figure 4, à une température fixe (25°C pour l'exemple de la figure 4), représentatives de la tension en fonction de l'état de charge de la batterie (1 représentant 100% de l'état de charge). Chaque courbe est associée à un régime de charge différent (3,33A, 2A et 1A pour la figure 4). La même étape est répétée pour une pluralité de températures différentes.

Afin de déterminer les valeurs de tension associées à une charge de la batterie, l'état de charge est fixé entre 75% et 90% de l'état de charge de la batterie. Ainsi, la lecture de la figure 4 permet de fixer une tension pour un couple courant/température. Par exemple, en fixant l'état de charge à 80% (0,8 sur la figure 4), le couple 25°C et 1A est associé à une valeur de tension d'environ 3,825V. Ainsi, lors de la mise en oeuvre du procédé de charge, si les valeurs mesurée $T_b$ et $I_b$ sont respectivement égales à 25°C et 1 A, la lecture de la table fournira précisément la valeur de 3,825V comme seuil de tension.

Concernant l'établissement de l'ensemble de couples associé à la décharge, les courbes de la figure 4 sont refaites à partir de batteries chargées pour des courants de décharge différents. L'état de charge est alors fixé entre 20% et 30% de l'état de charge de la batterie.

Selon un mode de réalisation particulier, il est possible de s'arranger pour que toute mesure d'une température $T_b$ de la batterie 1 et d'un courant $I_b$ de charge ou de décharge corresponde à une valeur prédéfinie de seuil de tension. Ainsi, la température $T_b$ de la batterie évoluant dans une première gamme prédéfinie, la mesure de la température est réalisée par un capteur 3 de température délivrant une première valeur parmi N valeurs représentatives de la première gamme. Le courant $I_b$ circulant dans la batterie 1 évoluant dans une seconde gamme prédéfinie, la mesure du courant $I_b$ est réalisée par des moyens de mesure 4 délivrant une seconde valeur parmi M valeurs représentatives de la seconde gamme. La table comporte alors N*M valeurs de tension, chaque tension étant accessible par un unique couple de température et de courant formé par lesdites première et seconde valeurs. Autrement dit, le capteur 3 de température et les moyens de mesure 4 du courant ont chacun une résolution prédéterminée leur permettant de mesurer dans une gamme prédéterminée un certain nombre de valeurs.

À titre d'exemple particulier illustrant le mode de réalisation décrit ci-dessus, la première gamme correspond à un intervalle de 0°C à 60°C en dehors duquel l'utilisation de la batterie n'est pas permise car considérée comme provoquant des dégradations interne de cette dernière. La résolution du capteur de température est de 1°C, par résolution on entend la précision de mesure du capteur associé, si la température réelle est de 1,8°C alors la température mesurée sera de 2°C. Selon ce postulat, l'ensemble de températures pouvant être mesurées représente un ensemble N de 61 valeurs. Sur le même principe, en prenant des moyens de mesure 4 de courant d'une résolution de 0,01A sur une gamme de 0A à 2A représentant le courant que peut fournir la source d'énergie renouvelable 2 lors de la charge, la gamme de mesure du courant est un intervalle défini par les bornes [0,01 ;2], ce qui représente un ensemble N de 200 valeurs différentes de courant mesurables par les moyens de mesure 4 du courant.

On obtient donc au final 12200 couples (soit 12200 valeurs de tension stockées dans la table) couvrant la totalité des combinaisons de mesure possibles.

Dès lors, la table précédemment décrite peut être complétée par des couples déterminés à partir d'une extrapolation des couples fixés lors de la réalisation des courbes pour obtenir au final un ensemble de N*M couples différents représentatifs de toutes les possibilités mesurables. De préférence, afin d'améliorer l'extrapolation et la rendre la plus précise possible, les bornes de la première gamme et les bornes de la seconde gamme font parties des couples fixés pour la réalisation des courbes.

De préférence, pour permettre de déterminer le nombre de couples, chaque valeur de température de la première gamme est séparée d'au moins une autre valeur de température de la première gamme par un écart de température inférieur ou égal à la précision de mesure du capteur 3 de température, et chaque valeur de courant de la seconde gamme est séparée d'au moins une autre valeur de courant de la seconde gamme par un écart de courant inférieur ou égal à la précision de mesure des moyens de mesure 4.

Une représentation possible de l'ensemble de couples se présente sous la forme d'une matrice de M lignes et N colonnes. Chaque ligne correspondant à un courant différent apte à être mesuré par les moyens de mesure 4 du courant selon leur résolution, et chaque colonne correspondant à une température différente apte à être mesurée par le capteur 3 de température selon sa résolution.

Il est ainsi possible d'établir les cartographies en 3-Dimensions des figures 2 et 3. La figure 2 représente l'ensemble de valeurs de tensions $U_{seuil}$ associées à un état de charge de 80% en fonction du courant I et de la température T. La figure 3 illustre l'ensemble de valeurs de tensions $U_{seuil}$ associées à un état de charge de 30% en fonction du courant 1 et de la température T.

Une autre représentation possible peut être une base de données à trois champs (température, courant, tension) embarquée dans un régulateur de la charge et de la décharge de la batterie dont la clé unique est une valeur de température et une valeur de courant.

Tout autre moyens de stockage des valeurs de tension pouvant mener à une détermination rapide du seuil de tension à déterminer peuvent être envisagés.

En fait, on peut distinguer deux ensembles de couples. Un premier ensemble correspond aux valeurs associées du seuil de tension représentatif du critère de fin de charge, et un second ensemble correspond aux valeurs associées du seuil de tension représentatif du critère de fin de décharge.

Bien que représentés comme séparés pour leur réalisation, l'ensemble de couples associé à la charge, et l'ensemble de couples associé à la décharge peuvent se présenter sous la forme d'une unique table, la seconde gamme comportant les valeurs de courant ayant une borne inférieure négative et une borne supérieure positive.

Grâce à une telle table pour déterminer le critère de fin de charge ou de décharge, l'utilisation de la batterie est autorisée uniquement dans une fenêtre électrochimique ne provoquant pas de dégradations physiques de la batterie. Ceci permet d'obtenir une meilleure longévité de la batterie en préservant son intégrité. Ainsi, le remplacement des batteries est moins fréquent.

Selon une implémentation du procédé, si le courant mesuré $I_b$ est négatif, le procédé est en phase de décharge, et la décharge est stoppée lorsque la tension $U_b$ aux bornes de la batterie devient inférieure ou égale au seuil de tension déterminé.

Selon une autre implémentation du procédé, si le courant mesuré $I_b$ est positif, le procédé est en phase de charge, et la charge est stoppée lorsque la tension $U_b$ aux bornes de la batterie devient supérieure ou égale au seuil de tension déterminé.

Au cours de la durée de vie d'une batterie, certaines valeurs physiques et chimiques de cette dernière changent. Dès lors, les couples de mesures et leurs seuils de tension associés peuvent différer de ceux établis au préalable. Ainsi, selon un mode de réalisation particulier, il peut être intéressant d'effectuer une correction des seuils de tension. Autrement dit, pour chaque couple de mesures, le seuil de tension associé peut être corrigé après un premier instant représentatif d'une durée d'utilisation de la batterie 1. Une telle correction peut par exemple être effectuée en analysant une caractéristique physique de la batterie 1 entre un deuxième instant antérieur au premier instant et un troisième instant postérieur au premier instant.

Selon un développement particulier, la correction des seuils de tension est fonction de la variation de la résistance interne de la batterie chargée à 100% de sa capacité entre un deuxième instant antérieur au premier instant et un troisième instant postérieur au premier instant. Autrement dit, après une durée d'utilisation prédéterminée, on réalise une étape de recharge de la batterie 1 à 100% de sa capacité, puis on mesure la résistance interne de la batterie 1 ainsi chargée, de préférence à une température appartenant à la première gamme définie précédemment. Cette résistance interne est alors comparée à une résistance interne mesurée dans les mêmes conditions à un moment antérieur à la durée d'utilisation prédéterminée. Pour chaque couple de mesures, le seuil de tension associé est alors corrigé en fonction du résultat de la comparaison des résistances internes.

Par exemple, si la résistance interne de la batterie chute de 20% entre le deuxième instant et le troisième instant, tous les seuils de tension peuvent alors être aussi modifiés de 20%.

Il est possible de généraliser par la formule suivante :

$$\frac{\Delta V}{V} = \alpha \frac{\Delta R}{R}$$

avec $\dfrac{\Delta V}{V}$ la variation à appliquer sur les seuils de tension, $\dfrac{\Delta R}{R}$ la variation mesurée de la résistance interne de la batterie, et a un facteur pouvant par exemple être compris entre 0,8 et 1,2.

La résistance interne de la batterie 1 peut être mesurée par des méthodes telles que la courbe de tension en fonction du courant ou par spectroscopie d'impédance. Bien entendu, tout autre méthode à la portée de l'homme de l'art pourra aussi être utilisée.

De préférence, le deuxième instant correspond à une mesure de la résistance interne d'une batterie neuve chargée à 100% de sa capacité.

L'exemple particulier ci-dessus décrit l'utilisation de la résistance interne de la batterie pour corriger les seuils de tension. Bien entendu, l'homme du métier sera à même de mesurer d'autres valeurs physiques pour corriger les seuils de tension.

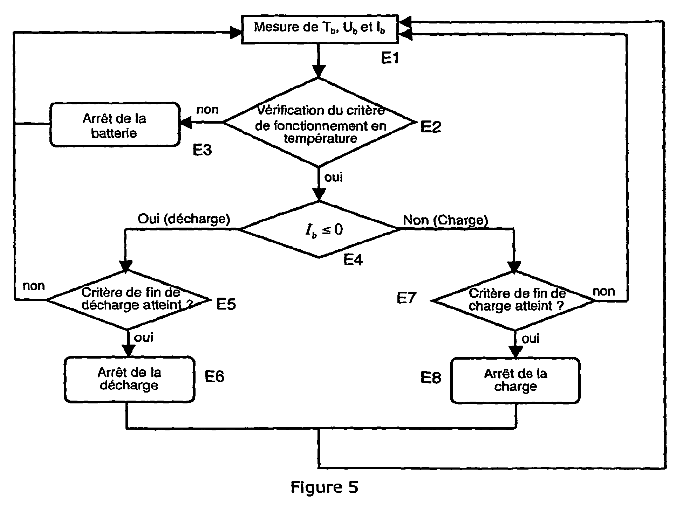

Selon un exemple particulier de fonctionnement, le diagramme décisionnel de fonctionnement d'un régulateur d'un système autonome tel que décrit précédemment est illustré à la figure 5. Ce diagramme comporte une première étape E1 dans laquelle une tension $U_b$, un courant $I_b$ et une température $T_b$ sont mesurés, de préférence simultanément. Dans une étape E2 successive à l'étape E1, un critère de fonctionnement est vérifié. Ce critère de fonctionnement correspond, de préférence, à une plage de températures dans laquelle le fonctionnement de la batterie est autorisé, par exemple entre 0°C et 60°C. En dehors de cette plage, la température favorise les réactions parasites dans la batterie, provoquant ainsi une dégradation de cette dernière. Ainsi, il sera possible d'interdire la charge et la décharge de la batterie hors de la plage de température. Si la température mesurée $T_b$ est en dehors de la plage (sortie non), alors la batterie est arrêtée (étape E3) et l'on retourne à l'étape E1. Au contraire, si la température mesurée est dans la plage de fonctionnement de la batterie (sortie oui), le régulateur passe dans une étape E4 de vérification du courant mesuré $I_b$. Dès lors, si le courant mesuré $I_b$ est inférieur ou égal à 0A, alors le régulateur passe à une étape E5 correspondant à la vérification du critère de fin de décharge à partir des valeurs mesurées du courant $I_b$ et de la température $T_b$ à l'étape E1. Si ce critère de fin de décharge est atteint, c'est-à-dire que la tension mesurée $U_b$ est inférieure ou égale au seuil de tension de décharge alors la décharge est stoppée (étape E6), puis le régulateur retourne à l'étape E1, sinon le régulateur retourne directement à l'étape E1 (sortie non de E5). Par contre, au niveau de l'étape E4, si le courant mesuré est supérieur à 0A, alors le régulateur passe à une étape E7 correspondant à la vérification du critère de fin de charge à partir des valeurs mesurées du courant $I_b$ et de la température $T_b$ à l'étape E1. Si ce critère de fin de charge est atteint, c'est-à-dire que la tension mesurée est supérieure ou égale au seuil de tension de charge alors la charge est stoppée (étape E8), puis le régulateur retourne à l'étape E1, sinon le régulateur retourne directement à l'étape E1 (sortie non de l'étape E7).

Un tel diagramme décisionnel peut-être intégré dans un logiciel d'un régulateur permettant le contrôle de la charge/décharge de la batterie.

**Revendications**

1. Procédé de charge ou de décharge d'une batterie comportant les étapes suivantes :

   - mesurer la tension ($U_b$) aux bornes de la batterie (1),
   - mesurer la température ($T_b$) de la batterie (1) au moyen d'un capteur de température (3) délivrant une première valeur parmi N valeurs représentatives d'une gamme de température,
   - mesurer le courant ($I_b$) circulant dans la batterie (1) au moyen d'un appareil de mesure (4) délivrant une deuxième valeur parmi M valeurs représentatives d'une gamme de courant,
   - déterminer un seuil de tension de fin de charge ou de décharge en fonction d'un couple de mesures formé par le courant ($I_b$) mesuré et la température ($T_b$) mesurée,
   - comparer la tension mesurée ($U_b$) avec le seuil de tension de fin de charge ou de décharge,
   - stopper la charge ou la décharge lorsque le seuil de tension est atteint, procédé **caractérisé en ce que** le seuil de tension de fin de charge ou de décharge est fourni par une table à deux entrées, une première entrée étant représentative du courant ($I_b$) mesuré, et une deuxième entrée étant représentative de la température ($T_b$) mesurée, la table comprenant N*M valeurs de tension et étant établie selon les étapes suivantes :

      - remplir la table avec un premier jeu de tensions de seuil de fin de charge ou de fin de décharge déterminées pour au moins deux valeurs prédéterminées du courant,
      - remplir la table avec une valeur de la tension de seuil de fin de charge ou de fin de décharge par extrapolation à partir du premier jeu de tensions de seuil de fin de charge ou de fin de décharge, chaque valeur extrapolée de la tension de seuil de fin de charge ou de fin de décharge étant séparée d'au moins une autre valeur extrapolée de la tension de seuil de fin de charge ou de fin de décharge par une différence de courant qui est égal à la précision de mesure des moyens de mesure du courant.

2. Procédé selon la revendication 1, **caractérisé en ce que** les mesures de la tension ($U_b$) aux bornes de la batterie (1), du courant ($I_b$) circulant dans la batterie (1) et de la température ($T_b$) de la batterie (1) sont réalisées simultanément.

3. Procédé selon l'une des revendications 1 et 2, **caractérisé en ce que** le seuil de tension correspond à un seuil d'état de charge en fonction du type de batterie, lors d'une charge ledit seuil d'état de charge correspond à un état de charge de 75% à 90% de la batterie.

4. Procédé selon l'une des revendications 1 et 2, **caractérisé en ce que** le seuil de tension correspond à un seuil d'état de charge en fonction du type de batterie, lors d'une décharge ledit seuil d'état de charge correspond à un état de charge de 20% à 30% de la batterie.

5. Procédé selon l'une quelconque des revendications 1 à 4, **caractérisé en ce que** la table est formée au préalable par les étapes suivantes :

   - prévoir une pluralité de courbes représentatives de la tension ($U_b$) aux bornes de la batterie (1) en fonction de l'état de charge de la batterie (1), chaque courbe étant établie pour un couple de température de la batterie ($T_b$) et de courant ($I_b$) circulant dans la batterie (1),
   - déterminer, pour chaque courbe, une valeur de tension à partir d'un d'état de charge de la batterie (1), et
   - ajouter dans la table chaque valeur de tension ainsi déterminée.

6. Procédé selon l'une quelconque des revendication 1 à 5, **caractérisé en ce que** le courant mesuré ($I_b$) étant négatif, le procédé est en phase de décharge, et la décharge est stoppée lorsque la tension ($U_b$) aux bornes de la batterie devient inférieure ou égale au seuil de tension déterminé.

7. Procédé selon l'une quelconque des revendications 1 à 5, **caractérisé en ce que** le courant mesuré ($I_b$) étant positif, le procédé est en phase de charge, et la charge est stoppée lorsque la tension ($U_b$) aux bornes de la batterie devient supérieure ou égale au seuil de tension déterminé.

8. Procédé selon l'une quelconque des revendications 1 à 7, **caractérisé en ce que** pour chaque couple de mesures, le seuil de tension associé est corrigé après un premier instant représentatif d'une durée d'utilisation de la batterie (1).

9. Procédé selon la revendication 8, **caractérisé en ce qu'**il comprend les étapes suivantes :

   - charger la batterie (1) à 100% de sa capacité,
   - déterminer la valeur de la résistance interne de la batterie (1),
   - comparer la valeur de la résistance interne de la batterie (1) avec une valeur de la résistance interne initiale de la batterie (1) déterminée de sorte à calculer la variation de la résistance interne de la batterie (1),
   - corriger toutes les tensions de seuil de fin de charge ou de fin de décharge de la table en fonction desdites variations de la résistance interne de la batterie (1).

10. Procédé selon la revendication 9, **caractérisé en ce que** la mesure de la résistance interne initiale est réalisée sur une batterie neuve chargée à 100% de sa capacité.

**Patentansprüche**

1. Verfahren zum Laden oder Entladen einer Batterie, das die folgenden Schritte umfasst:

   - Messen der Spannung ($U_b$) an den Anschlüssen der Batterie (1),
   - Messen der Temperatur ($T_b$) der Batterie (1) mittels eines Temperaturfühlers (3), der einen ersten Wert aus für einen Temperaturbereich repräsentativen N Werten liefert,
   - Messen des in der Batterie (1) fließenden Stroms ($I_b$) mittels eines Messgerätes (4), das einen zweiten Wert aus für einen Strombereich repräsentativen M Werten liefert,
   - Bestimmen einer Spannungsschwelle des Lade- oder Entladeendes in Abhängigkeit von einem Paar von Messwerten, das durch den gemessenen Strom ($I_b$) und die gemessene Temperatur ($T_b$) gebildet ist,
   - Vergleichen der gemessenen Spannung ($U_b$) mit der Spannungsschwelle des Lade- oder Entladeendes,
   - Anhalten des Ladens oder des Entladens, wenn die Spannungsschwelle erreicht ist,

   Verfahren, das **dadurch gekennzeichnet ist, dass** die Spannungsschwelle des Lade- oder Entladeendes durch eine Tabelle mit zwei Eingängen bereitgestellt wird, wobei ein erster Eingang für den gemessenen Strom ($I_b$) repräsentativ ist und wobei ein zweiter Eingang für die gemessene Temperatur ($T_b$) repräsentativ ist, wobei die Tabelle N*M Spannungswerte umfasst und nach den folgenden Schritten erstellt wird:

- Füllen der Tabelle mit einem ersten Satz von Schwellenspannungen des Ladeendes oder Entladeendes, die für wenigstens zwei vorbestimmte Werte des Stroms bestimmt werden,
- Füllen der Tabelle mit einem Wert der Schwellenspannung des Ladeendes oder Entladeendes durch Extrapolieren anhand des ersten Satzes von Schwellenspannungen des Ladeendes oder Entladeendes, wobei ein jeder extrapolierter Wert der Schwellenspannung des Ladeendes oder Entladeendes von wenigstens einem weiteren extrapolierten Wert der Schwellenspannung des Ladeendes oder Entladeendes durch eine Stromdifferenz, die gleich der Messgenauigkeit der Mittel zum Messen des Stroms ist, getrennt ist.

2. Verfahren nach Anspruch 1, **dadurch gekennzeichnet, dass** die Messungen der Spannung ($U_b$) an den Anschlüssen der Batterie (1), des in der Batterie (1) fließenden Stroms ($I_b$) und der Temperatur ($T_b$) der Batterie (1) gleichzeitig durchgeführt werden.

3. Verfahren nach einem der Ansprüche 1 und 2, **dadurch gekennzeichnet, dass** die Spannungsschwelle einer Ladezustandsschwelle in Abhängigkeit von dem Batterietyp entspricht, bei einem Laden entspricht die Ladezustandsschwelle einem Ladezustand von 75 % bis 90 % der Batterie.

4. Verfahren nach einem der Ansprüche 1 und 2, **dadurch gekennzeichnet, dass** die Spannungsschwelle einer Ladezustandsschwelle in Abhängigkeit von dem Batterietyp entspricht, bei einem Entladen entspricht die Ladezustandsschwelle einem Ladezustand von 20 % bis 30 % der Batterie.

5. Verfahren nach einem der Ansprüche 1 bis 4, **dadurch gekennzeichnet, dass** die Tabelle vorher durch die folgenden Schritte gebildet wird:

- Vorsehen einer Vielzahl von Kurven, die für die Spannung ($U_b$) an den Anschlüssen der Batterie (1) in Abhängigkeit von dem Ladezustand der Batterie (1) repräsentativ sind, wobei eine jede Kurve für ein Paar aus Temperatur der Batterie ($T_b$) und in der Batterie (1) fließendem Strom ($I_b$) erstellt wird,
- Bestimmen eines Spannungswertes anhand eines Ladezustands der Batterie (1) für jede Kurve und
- Hinzufügen eines jeden auf diese Weise bestimmten Spannungswertes zu der Tabelle.

6. Verfahren nach einem der Ansprüche 1 bis 5, **dadurch gekennzeichnet, dass**, wenn der gemessene Strom ($I_b$) negativ ist, das Verfahren in der Entladephase ist, und das Entladen gestoppt wird, wenn die Spannung ($U_b$) an den Anschlüssen der Batterie die bestimmte Spannungsschwelle unterschreitet oder gleich dieser wird.

7. Verfahren nach einem der Ansprüche 1 bis 5, **dadurch gekennzeichnet, dass**, wenn der gemessene Strom ($I_b$) positiv ist, das Verfahren in der Ladephase ist, und das Laden gestoppt wird, wenn die Spannung ($U_b$) an den Anschlüssen der Batterie die bestimmte Spannungsschwelle überschreitet oder gleich dieser wird.

8. Verfahren nach einem der Ansprüche 1 bis 7, **dadurch gekennzeichnet, dass** für jedes Messwert-Paar die zugeordnete Spannungsschwelle nach einem ersten Zeitpunkt, der für eine Verwendungsdauer der Batterie (1) repräsentativ ist, korrigiert wird.

9. Verfahren nach Anspruch 8, **dadurch gekennzeichnet, dass** es die folgenden Schritte umfasst:

- Laden der Batterie (1) auf 100 % ihrer Kapazität,
- Bestimmen des Wertes des Innenwiderstands der Batterie (1),
- Vergleichen des Wertes des Innenwiderstands der Batterie (1) mit einem bestimmten Wert des Ausgangsinnenwiderstands der Batterie (1), um die Änderung des Innenwiderstands der Batterie (1) zu berechnen,
- Korrigieren aller Schwellenspannungen des Ladeendes oder Entladeendes der Tabelle in Abhängigkeit von den Änderungen des Innenwiderstands der Batterie (1).

10. Verfahren nach Anspruch 9, **dadurch gekennzeichnet, dass** die Messung des Ausgangsinnenwiderstands an einer neuen, auf 100 % ihrer Kapazität geladenen Batterie durchgeführt wird.

## Claims

1. A method for charging or discharging a battery comprising the following steps:

• measuring a voltage ($U_b$) at terminals of the battery (1),

• measuring a temperature ($T_b$) of the battery (1) by means of a temperature sensor (3) delivering a first value from among N values representative of a first range of temperature,
• measuring the current ($I_b$) flowing in the battery (1) by current measuring means (4) delivering a second value from among M values representative of a second range of current,
• determining an end of charging or discharging voltage threshold according to a pair of measurements formed by the measured current ($I_b$) and the measured temperature ($T_b$),
• comparing the measured voltage ($U_b$) with the end of charging or discharging voltage threshold,
• stopping charging or discharging when the voltage threshold is reached, **characterized in that** the end of charging or discharging voltage threshold is supplied by a table with two inputs, a first input being representative of the measured current ($I_b$) and a second input being representative of the measured temperature ($T_b$), the table comprising N*M voltage values and being established according to the following steps:
• filling the table with a first set of end of charging or discharging voltage threshold determined for at least two predefined current values,
• filling the table with a value of the end of charging or discharging voltage threshold by extrapolation from the first set of end of charging or discharging voltage threshold, each extrapolated end of charging or discharging voltage threshold being separated from at least one other extrapolated end of charging or discharging voltage threshold by a current difference that is smaller than or equal to a precision of measurement of the current measuring means.

2. The method according claim 1, **characterized in that** the measurements of the voltage ($U_b$) at the terminals of the battery (1), of the current ($I_b$) flowing in the battery (1) and of the temperature ($T_b$) of the battery (1) are performed simultaneously.

3. The method according claim 1 or 2, **characterized in that** the voltage threshold corresponds to a state of charge threshold depending on the type of battery, when charging is performed said state of charge threshold corresponds to a state of charge of the battery of 75% to 90%.

4. The method according claim 1 or 2, **characterized in that** the voltage threshold corresponds to a state of charge threshold depending on the type of battery, when discharging is performed said state of charge threshold corresponds to a state of charge of the battery of 20% to 30%.

5. The method according to any one of claims 1 to 4, **characterized in that** the table is formed beforehand by the following steps:

• providing a plurality of curves representative of the voltage ($U_b$) at the terminals of the battery (1) according to the state of charge of the battery (1), each curve being established for one pair formed by the temperature ($T_b$) of the battery (1) and a current ($I_b$) flowing in the battery (1),
• determining, for each curve, a voltage value from a state of charge of the battery (1), and
• adding each voltage value determined in this way to the table.

6. The method according to any one of claims 1 to 5, **characterized in that** the measured current ($I_b$) being negative, the method is in discharging phase, and discharging is stopped when the voltage ($U_b$) at the terminals of the battery becomes lower than or equal to the determined voltage threshold.

7. The method according to any one of claims 1 to 5, **characterized in that** the measured current ($I_b$) being positive, the method is in charging phase, and charging is stopped when the voltage ($U_b$) at the terminals of the battery becomes greater than or equal to the determined voltage threshold.

8. The method according to any one of claims 1 to 7, **characterized in that** for each pair of measurements, the associated voltage threshold is corrected after a first time representative of a period of use of the battery (1).

9. The method according to claim 8, **characterized in that** it further comprises :

• charging the battery (1) to 100% of capacity,
• determining an internal resistance value of the battery (1),
• comparing said internal resistance value of the battery (1) with an initial internal resistance value of the battery (1) determined so as to calculate a variation of the internal resistance of the battery (1),
• correcting all of the end of charging or discharging voltage threshold in the table according to said variation of the internal resistance of the battery (1).

10. The method according to claim 9, **characterized in that** the measurement of the initial internal resistance is performed on a new battery charged to 100% of its capacity.

Figure 1

Figure 2

Figure 3

Etat de charge

Figure 4

Mesure de $T_b$, $U_b$ et $I_b$

E1

Vérification du critère de fonctionnement en température

E2

non

Arrêt de la batterie

E3

oui

$I_b \leq 0$

E4

Oui (décharge)

Non (Charge)

Critère de fin de décharge atteint ?

E5

non

oui

Arrêt de la décharge

E6

Critère de fin de charge atteint ?

E7

non

oui

Arrêt de la charge

E8

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1990890 A

- US 6453249 B1